Europäisches Patentamt

European Patent Office

Office européen des brevets

(19)

(11) Numéro de publication: **0 012 095**
**B1**

(12) **FASCICULE DE BREVET EUROPEEN**

(45) Date de publication du fascicule de brevet:
**31.03.82**

(21) Numéro de dépôt: **79420059.2**

(22) Date de dépôt: **23.11.79**

(51) Int. Cl.³: **B 62 D 53/02, E 02 F 3/72**

(54) **Véhicule d'élévation et de manutention de charges, autostable.**

(30) Priorité: **27.11.78 FR 7833389**

(43) Date de publication de la demande:
**11.06.80 Bulletin 80/12**

(45) Mention de la délivrance du brevet:
**31.03.82 Bulletin 82/13**

(84) Etats contractants désignés:
**AT BE DE GB IT SE**

(56) Documents cités:
**FR-A-1 259 800**
**GB-A-947 286**
**US-A-2 426 544**
**US-A-4 082 197**

(73) Titulaire: **Gibert, Pierre Jean Marie, "Les Biches" St Cergues, F-74140 Douvaine (FR)**

(72) Inventeur: **Gibert, Pierre Jean Marie, "Les Biches" St Cergues, F-74140 Douvaine (FR)**

BUNDESDRUCKEREI BERLIN

Véhicule d'élévation et de manutention de charges, autostable

L'invention concerne un véhicule d'élévation et de manutention de charges, autostable, prenant la charge à manutentionner, devant lui, en porte à faux par rapport à l'essieu avant de son châssis, par l'intermédiaire d'un organe de levage et de prise de la charge selon le préambule de la revendication 1.

Généralement, ces appareils de manutention évoluent à l'intérieur de bâtiments, ou sur des aires préparées, mais, de plus en plus, le stockage se faisant à l'extérieur, de tels engins sont amenés à circuler également sur des terrains non préparés, et, par conséquent, doivent à la fois, avoir un encombrement réduit pour circuler à l'intérieur des bâtiments, et une grande stabilité longitudinale pour évoluer à l'extérieur avec une charge en position haute.

Il est déjà connu des véhicules de manutention, correspondants, au préambule de la revendication 1 (US-A-4 082 197).

Le document US-A-4 082 197 concerne un véhicule d'élévation et de manutention dont le châssis est composé de deux éléments, porteurs respectivement de l'essieu arrière et de l'essieu avant, éléments articulés entre eux autour d'un axe. Ce véhicule comporte également un bras supérieur, solidaire de l'élément arrière du châssis, et servant d'articulation au bras porteur disposé au dessus et longitudinalement au châssis.

Dans ce type d'appareil, l'articulation centrale, liant les deux éléments du châssis, est une articulation sensiblement verticale qui a pour but de permettre une orientation en direction de l'engin. Ce type d'articulation, très utilisé dans les appareils tous terrains, évite l'effet de gouvernail, nuisible à l'avancement en terrain boueux, présenté par les directions de type automobile. Ce document apporte essentiellement, une solution à la stabilité latérale, délicate, de ces engins de levage à articulation verticale d'orientation, particulièrement lorsqu'ils pivotent, à l'arrêt, autour de cet axe vertical, avec une charge haute qui entraine un déport latéral du centre de gravité de cette charge vers l'extérieur du polygone de sustentation du véhicule. Dans ce document, il est porté remède à cette instabilité latérale, véhicule à l'arrêt, par une disposition particulière de patins stabilisateurs, à poste fixe, situés de part et d'autre de l'axe vertical d'orientation. La stabilité latérale seule, est ici améliorée, et ce, le véhicule n'étant pas en mouvement de translation.

— Le document GB-A-947 286, comporte un châssis composé de deux éléments, porteurs respectivement, de l'essieu arrière et de l'essieu avant, et articulés entre eux autour d'un axe horizontal. Cette disposition reporte en arrière de l'essieu avant, l'articulation classique des mâts de chariots élévateurs, généralement articulés à l'avant de l'essieu sur une prolongation du châssis, et, de ce fait, permet aux réactions verticales dues à la charge manutentionnée, d'être absorbées directement par l'essieu avant, au lieu des seuls axes de liaison du mât et du châssis, des systèmes classiques. Cette articulation permet d'incliner légèrement le mât, en avant ou en arrière, pour assurer la prise ou la pose de palettes à manutentionner. Cependant, une telle disposition présente l'inconvénient suivant: du fait de l'importante distance entre le centre de gravité de la charge en haut du mât, et le point bas de l'articulation de ce mât, tout mouvement de ce mât, et le point bas de l'articulation de ce mât, tout mouvement de ce mât autour de son axe d'articulation, provoque une accélération longitudinale de la charge haute, en avant ou en arrière, susceptible de provoquer un moment d'instabilité longitudinale, nuisible à la sécurité. De même, une simple inclinaison exagérée, en avant, du mât autour de son axe, et alors que la charge est placée en haut, provoque un accroissement du porte à faux avant, donc du moment d'instabilité longitudinal du véhicule. Enfin, suivant cette disposition, tout mouvement de la charge à grande hauteur est dépendant de l'action du conducteur, du point de vue sécurité.

— La présente invention a pour but d'apporter un remède à ces difficultés. L'invention, telle qu'elle est caractérisée dans les revendications, résout le problème consistant à créer un véhicule d'élévation et de manutention de charges, autostable, véhicule dans lequel le fait d'élever en hauteur une charge, s'accompagne automatiquement d'une augmentation de la stabilité longitudinale de ce véhicule. Les avantages obtenus grace à cette invention consistent essentiellement en ce que le véhicule, lorsque sa charge est basse, reste très compacte et comparable aux appareils de manutention classiques, mais par rapport à eux, il voit sa stabilité longitudinale augmenter au fur et à mesure de l'élévation de la charge, et ce, automatiquement, par le recul de la masse arrière, sans intervention dépendante du conducteur.

L'évolution de ce véhicule, charge haute, se fait donc avec une sécurité considérablement améliorée par rapport aux appareils conventionnels.

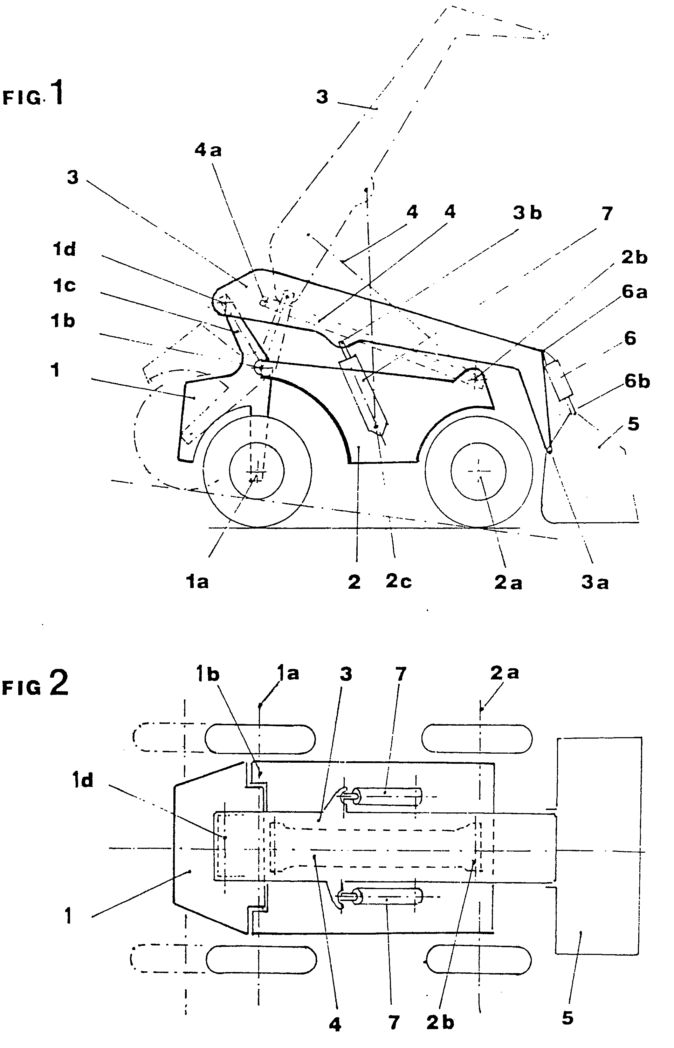

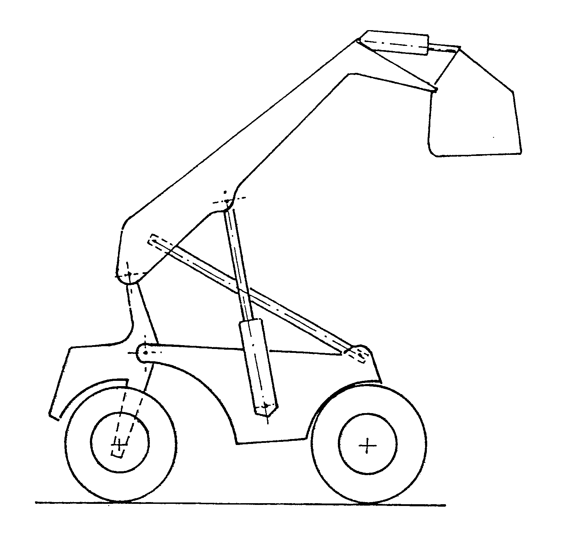

— Dans ce qui suit, un véhicule conforme à l'invention représenté suivant un mode d'éxécution non limitatif, sur les planches ci-jointes:
— Planche 1: la figure 1 est une vue de profil du véhicule conforme à l'invention

la figure 2, est une vue de dessus de ce même véhicule.
- Planche 2: vue de profil extérieur d'un mode de réalisation de l'appareil.

Comme il est représenté Planche 1 figure 1, le véhicule est composé:
- d'un châssis en deux éléments: l'élément arrière (1), solidaire de l'essieu arrière (1a) l'élément avant (2) solidaire de l'essieu avant (2a) ces deux éléments articulés entre eux autour d'un axe (1b) parallèle à l'axe de chacun de ces deux essieux (1a et 2a) en position route droite, de façon à permettre l'écartement ou le rapprochement de ces deux essieux (1a et 2a,) par oscillation autour de l'axe (1b.)
- L'élément arrière (1) est solidaire de l'essieu arrière (1a) situé parallèlement à l'articulation (1b;) un bras (1c,) faisant partie de cet élément arrière, donc également solidaire de l'essieu (1a,) est situé au dessus de l'axe d'oscillation (1b) et porte un axe (1d,) également parallèle à l'articulation (1b.)
- L'élément avant (2,) solidaire de l'essieu avant (2a,) parallèle en position route droite à l'axe d'articulation (1b.)
- Un bras porteur (3,) est situé au dessus du châssis composé des éléments articulés (1 et 2) et parallèment à l'axe longitudinal du châssis.
- Ce bras (3) compo.te à son extremité arrière, un axe d'articulation (1d) commun avec celui du bras de l'élément arrière du châssis, permettant ainsi au bras (3) d'évoluer autour de cet axe (1d) dans un plan vertical perpendiculaire à l'axe (1b.) Ce bras porteur comporte à son autre extremité, située à l'avant du véhicule, un axe (3a) portant l'équipement adapté à la prise de charge. Dans l'exemple choisi, un godet (5) articulé au bras, sur l'axe (3a,) sous la commande d'un vérin (7) par l'intermédiaire de ses axes (6a et 6b,) respectivement solidaires du bras (3) et du godet (5,) permet l'inclinaison de celui-ci.
- Le bras porteur (3) comporte également un autre axe (4a,) paralèle aux axes (1d et 3a) ainsi qu'à l'axe (1b,) et situé entre l'axe (1d) et l'axe (3a) de telle sorte qu'une bielle (4,) comportant elle-même deux alésages situés en ses extrémités, permet, en recevant dans ses alésages respectivement les axes (4a) et (2b,) la liaison du bras de levage (3) à l'élément avant (2) du châssis.

Ainsi, les axes de bras (1d, 4a, 2b, 1b,) et la bielle (4) permettent un déploiement du bras (3) dans un plan vertical qui leur est perpendiculaire; Ce déploiement s'opère sous la poussée du ou des vérins (7), prenant appui en (2c) sur l'élément avant (2) du châssis, et en (3b,) sur le bras porteur (3.)

Le trapèze déformable, classique, formé par: le bras (1c,) porteur des articulations (1d) et (1b,) faisant partie de l'élément arrière du châssis (1,) l'élément avant (2) porteur des axes (1b) et (2b,) la bielle (4) porteuse des axis (2b et 4a,) et le bras (3), porteur des axes (4a) et (1d,) axes tous parallèles entre eux, fait que, sous la poussée du ou des vérins (7,) le bras porteur (3) s'élève, maintenu à l'avant par la bielle (4,) et oblige le rappel autour de l'axe (1b) du bras (1c,) vers l'avant du véhicule. Ce bras faisant partie de l'élément arrière, oblige la partie basse de ce dernier à reculer, entrainant dans son déplacement, et en même temps, l'essieu (1a,) qui s'écarte ainsi parallèlement, en position route droite, de l'essieu avant, d'où, recul du centre de gravité, en même temps qu'accroissement de l'empattement, et ce, au fur et à mesure que le bras (3) s'élève, ce qui contribue à assurer l'accroissement de sécurité souhaité.

Bien entendu, l'invention n'est pas limitée à l'exemple de réalisation ci-dessus décrit et représenté, à partir duquel on pourra, au besoin, recourir à d'autres modes et à d'autres formes de réalisations, sans pour cela sortir du cadre de l'invention.

**Revendications**

1. Véhicule d'élévation et de manutention de charges, autostable, prenant les charges à manutentionner devant lui, en porte à faux par rapport à l'essieu avant de son châssis, par l'intermédiaire d'un organe de levage et de prise de charge, constitué par un châssis composé de deux éléments (1, 2) porteurs, respectivement de l'essieu arrière (1a) et de l'essieu avant (2a), ces deux éléments étant articulés entre eux, comportant également un bras porteur (3) situé au-dessus du châssis (1, 2), parallèlement à l'axe longitudinal du véhicule, bras (3) équipé à son extrémité arrière d'un axe d'articulation (1d) commun avec celui du bras (1c) de l'élément arrière du châssis et s'articulant autour de lui, de façon à permettre son déploiement dans un plan vertical, ce bras porteur (3) comportant également, à la suite de cet axe, un second axe (4a) parallèle à son premier axe (1d) et, enfin, à son extrémité avant, un troisième axe (3a) recevant l'équipement de préhension, caractérisé en ce qu'une bielle (4) comportant à chacune de ses deux extrémités un alésage recevant respectivement l'axe (4a) appartenant au bras de levage (3) et l'axe (2b) appartenant à l'élément avant du châssis (2), lie, d'une façon articulée, ces deux éléments, de telle sorte que le bras (1c) entre ses articulations (1b, 1d), l'élément avant du châssis entre ses articulations (1b, 2b), la bielle (4) entre ses axes (2b, 4a) et le bras de levage (3) entre ses axes (4a, 1d), forment un trapèze déformable dans un plan vertical par rapport à l'axe horizontal (1b) d'articulation du châssis et en ce que, les deux éléments (1, 2) sont articulés entre eux autour d'un axe horizontal (1b) situé sensiblement au-dessus de l'essieu arrière (1a) et parallèlement aux essieux (1a, 2a) en position route droite, l'élément arrière (1) du châssis, comprenant à sa partie supérieure un bras (1c) porteur d'un axe (1d) situé parallèlement, et au dessus de l'axe d'articulation (1b) liant les deux éléments du châssis, l'élément avant (2) du châssis comprenant à sa partie supérieure un axe (2b) situé parallèlement à l'axe d'articulation horizontal (1b) liant les éléments (1, 2) du châssis.

2. Véhicule d'élévation et de manutention de charges, conforme à la revendication 1, caractérisé en ce que la déformation du trapèze, obtenue par l'action d'un ou plusieurs vérins (7) prenant appui sur l'élément avant (2) du châssis, par un axe (2c) d'une part et sur le bras de levage (3) par un autre axe (3b) d'autre part, entraîne le déplacement du bras de levage (3) et donc, l'élévation de la charge dans un plan vertical et, simultanément, un déplacement horizontal de l'essieu arrière (1a) autour de l'axe d'articulation (1b) du châssis et le recul du centre de gravité surbaissé de l'élément arrière (1) de ce châssis, améliorant ainsi la stabilité longitudinale.

**Patentansprüche**

1. Hebe- und Handling-Fahrzeug für Lasten; eigenstabil; die Lasten werden vorn aufgenommen, freitragend bezogen auf die Vorderachse des Chassis, wofür ein Hebe- und Lastaufnahmesystem eingerichtet wurde; dieses System besteht aus einem Chassis aus zwei Tragelementen (1, 2) an der Hinterachse (1a) und der Vorderachse (2a), die untereinander durch Gelenke verbunden sind. Außerdem gehört dazu ein Tragarm (3) über dem Chassis (1, 2), der parallel zur Längsachse des Fahrzeugs angeordnet ist; dieser Tragarm (3) ist an seinem hinteren Ende mit einer Gelenkachse (1d) ausgestattet, die mit Tragarm (1c) des hinteren Chassisteils verbunden ist und sich um dieses dreht, so daß es in vertikaler Richtung ausgefahren werden kann; dieser Tragarm (3) umfaßt außerdem im Anschluß an diese Achse eine zweite Achse (4a) parallel zur ersten Achse (1d) und an seinem vorderen Ende eine dritte Achse (3a), welche die Greiferausstattung aufnimmt; gekennzeichnet ist die Erfindung dadurch, daß eine Pleuelstange (4) mit einer Bohrung an beiden Enden für Achse (4a), für Hebearm (3) und Achse (2b) für das vordere Chassisteil (2) enthält, diese beiden Elemente mit Gelenk derart verbindet, daß Tragarm (1c) zwischen seinen Gelenken (1b, 1d), das vordere Chassisteil zwischen seinen Gelenken (1b, 2b), die Pleuelstange (4) zwischen ihren Achsen (2b, 4a) und Hebearm (3) zwischen seinen Achsen (4a, 1d) in vertikaler Richtung, bezogen auf die horizontale Gelenkachse des Chassis (1b), ein verformbares Trapez bilden; ferner ist die Erfindung dadurch gekennzeichnet, daß die beiden Elemente (1, 2) untereinander um eine Horizontalachse (1b) angelenkt sind, die merklich oberhalb der Hinterachse (1a) und parallel zu den Achsen (1a, 2a) in Geradeausfahrposition angeordnet sind. Das hintere Chassisteil (1), welches in seinem oberen Teil einen Tragarm (1c) einer Achse (1d) umfaßt, der parallel oberhalb der Gelenkachse (1b) angeordnet ist, welche die beiden Chassiselemente verbindet, wobei das vordere Element (2) des Chassis in seinem oberen Teil eine Achse (2b) umfaßt, welche parallel zur horizontalen Gelenkachse (1b) angeordnet ist und die Chassisteile (1, 2) verbindet.

2. Fahrzeug zum Heben und Handling von Lasten gemäß Anspruch 1, gekennzeichnet dadurch, daß die Verformung des Trapezes, die durch einen oder mehrere Hydraulikzylinder (7) hergestellt wird, welche auf dem vorderen Element des Chassis (2) über eine Achse (2c) und auf dem Hebearm (3) über eine andere Achse (3b) abgestützt sind, zur Verschiebung des Hebearmes (3) führt und damit die Last senkrecht angehoben wird und gleichzeitig die Hinterachse (1a) horizontal um die Gelenkachse (1b) des Chassis verschoben wird, wobei die Verschiebung des tiefliegenden Schwerpunktes des hinteren Elements (1) nach hinten die Längsstabilität verbessert.

**Claims**

1. Self-supporting vehicle for lifting and handling loads, taking up the loads to be handled in front of it, offset in relation to the front axle of its chassis, by means of a component for lifting and gripping the load, composed of a chassis consisting of two carrying elements (1, 2), respectively the rear axle (1a) and the front axle (2a), these two elements being linked to each other, comprising also a carrying arm (3) located under the chassis (1, 2), parallel to the longitudinal axis of the vehicle, arm (3) being fitted at its rear end with an articulation axis (1d) common with that of the arm (1c) of the rear element of the chassis and articulating around it, in such a way as to allow its extension in the vertical plane, this carrying arm (3) comprising also, after this axis, a second axis (4a) parallel to its first axis (1d) and, finally, at its front end, a third axis (3a) which receives the gripping equipment, characterized by the fact that a connecting rod (4) comprising at each of its two extremities a bore which receives respectively the axis (4a) belonging to the lifting arm (3) and the axis (2b) belonging to the front element of the chassis (2), connects, in an articulated manner, these two elements, in such a way that the arm (1c) between its articulations (1b, 1d), the front element of the chassis between its articulations (1b, 2b), the connecting rod (4) between its axes (2b, 4a) and the lifting arm (3) between its axes (4a, 1d), form a deformable trapezium in a vertical plane in relation to the horizontal axis (1b) of articulation of the chassis and by the fact that the two elements (1, 2) are articulated between them around a horizontal axis (1b) located more or less over the rear axle (1a) and parallel to the axles (1a, 2a) in the straight road position, the rear element (1) of the chassis comprising in its upper part an arm (1c) which carries a pin (1d) located parallel to and above the articulation axis (1b) which connects the two elements of the chassis, the front element (2) of the chassis comprising in its upper part a pin (2b) located parallel to the horizontal articulation pin (1b) which connects the elements (1, 2) of the chassis.

2. Load lifting and handling vehicle, in accordance with claim 1, characterized by the fact that the deformation of the trapezium, obtained by the action of one or several jacks (7) pressing against the front element (2) of the chassis, by a pin (2c) on the one hand, and on the lifting arm (3) by another pin (3b) on the other hand, causes the movement of the lifting arm (3) and thus the lifting of the load in a vertical plane, and, simultaneously, a horizontal movement of the rear axle (1a) around the articulation axis (1b) of the chassis and the movement to the rear of the lowered centre of gravity of the rear element (1) of this chassis, thereby improving the longitudinal stability.

FIG. 1

3

4a

3

1d
1c
1b

1

4  4    3b    7

2b
6a

6

6b

5

1a          2  2c      2a      3a

FIG 2

1b    1a    3    7        2a

1d

1

4    7    2b            5